# EUROPÄISCHE PATENTSCHRIFT

(11) **EP 2 143 179 B1**
(45) Veröffentlichungstag und Bekanntmachung des Hinweises auf die Patenterteilung: **01.07.2015**
(21) Anmeldenummer: 08717235.9
(22) Anmeldetag: 28.02.2008
(51) Int. Cl.: H01R 39/04, H01R 43/08, H02K 13/00, H02K 13/04

(54) **KOMMUTATOR FÜR EINE ELEKTRISCHE MASCHINE SOWIE HERSTELLUNGSVERFAHREN FÜR EINEN KOMMUTATOR**
COMMUTATOR FOR AN ELECTRIC MACHINE, AND METHOD OF PRODUCTION OF A COMMUTATOR
COMMUTATEUR POUR MOTEUR ÉLECTRIQUE ET PROCÉDÉ DE PRODUCTION D'UN COMMUTATEUR

(30) Priorität: 25.04.2007 DE 102007019430
(43) Veröffentlichungstag der Anmeldung: 13.01.2010
(73) Patentinhaber: Robert Bosch GmbH, 70442 Stuttgart (DE)
(72) Erfinder: GLUECK, Wolfgang, 76532 Baden-baden (DE); OCHS, Markus, 76534 Baden-baden (DE); BOSCHERT, Martin, 77704 Oberkirch (DE)
(86) Internationale Anmeldenummer: PCT/EP2008/052453
(87) Internationale Veröffentlichungsnummer: WO 2008/131980

(56) Entgegenhaltungen:
- DE-C- 478 071
- US-A1- 2004 181 930

## Beschreibung

### Stand der Technik

Die Erfindung betrifft einen Kommutator für eine elektrische Maschine gemäß dem Oberbegriff des Anspruchs 1, eine elektrische Maschine gemäß Anspruch 7 sowie ein Herstellungsverfahren für einen Kommutator gemäß dem Oberbegriff des Anspruchs 8.

US 2004/181930 A1 offenbart den Oberbegriff von Anspruch 1 und 8.

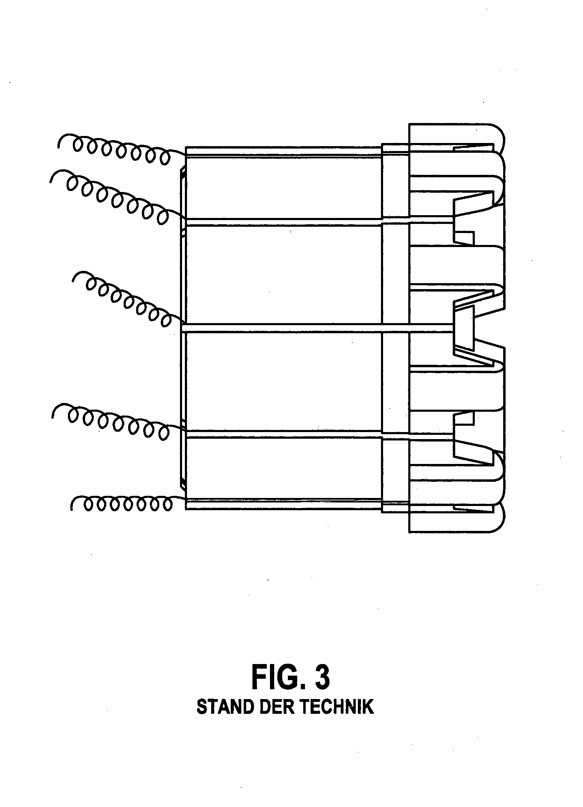

In Fig. 3 ist ein Kommutator zur Kommutierung von Gleichstrommaschinen aus dem Stand der Technik gezeigt. Der Kommutator weist eine am Außenumfang angeordnete Umfangslauffläche aus Kupfer oder einer Kupferlegierung zur Kontaktierung von nicht gezeigten Kohlebürsten auf. Dabei ist die Umfangslauffläche aus einzelnen in Umfangsrichtung hintereinander angeordneten und jeweils durch einen in axialer Richtung verlaufenden Schlitz voneinander getrennten Metalllamellen gebildet. Die Umfangslauffläche des Kommutators wird spanend in zwei Schritten, durch Schruppen und darauffolgendes Schlichten bearbeitet, um die gewünschten Geräuschsanforderungen zu erreichen. Wie in Fig. 3 schematisch dargestellt ist, bleiben insbesondere die beim Schlichten entstehenden Späne am axialen Ende der Isolierschlitze hängen. Während des Betriebs einer mit dem gezeigten Kommutator ausgestatteten elektrischen Maschine, insbesondere eines Fensterhebermotors, können die Späne dann abreißen bzw. sich ablösen und zu einer Einschränkung der Funktion der elektrischen Maschine, insbesondere durch das Verursachen von Kurzschlüssen führen.

### Offenbarung der Erfindung

### Technische Aufgabe

Der Erfindung liegt daher die Aufgabe zugrunde, einen Kommutator vorzuschlagen, durch den die Gefahr einer Beschädigung einer mit dem Kommutator ausgestatteten elektrischen Maschine minimiert ist. Ferner besteht die Aufgabe darin, eine entsprechende elektrische Maschine sowie ein Herstellungsverfahren für einen solchen Kommutator vorzuschlagen.

### Technische Lösung

Hinsichtlich des Kommutators wird die Aufgabe mit den Merkmalen des Anspruchs 1, hinsichtlich der elektrischen Maschine mit den Merkmalen des Anspruchs 7 und hinsichtlich des Herstellungsverfahrens mit den Merkmalen des Anspruchs 8 gelöst. Vorteilhafte Weiterbildungen der Erfindung sind in den Unteransprüchen angegeben. In den Rahmen der Erfindung fallen auch sämtliche Kombinationen aus zumindest zwei von in der Beschreibung, den Ansprüchen und/oder den Figuren angegebenen Merkmalen.

Der Erfindung liegt der Gedanke zugrunde, den Kommutator derart auszubilden, dass sich die Umfangslauffläche nicht bis zu dem den Befestigungsmitteln gegenüberliegenden axialen Ende des Kommutators erstreckt, sondern lediglich bis zu einem sich in Umfangsrichtung erstreckenden Absatz, der die Umfangslauffläche in radialer Richtung überragt. Die Umfangslauffläche erhält hierdurch eine geringere Axialerstreckung. Bei einem derart ausgebildeten Kommutator ist die Gefahr gering, dass sich bei der spanenden Bearbeitung entstehende Metallspäne im axialen Endbereich der Isolierschlitze verhaken, die die Umfangslauffläche bildenden Metalllamellen voneinander isolieren. Somit sinkt auch die Gefahr des unbeabsichtigten Ablösens von Metallspänen während des Betriebs einer mit einem derartigen Kommutator ausgestatteten elektrischen Maschine, insbesondere eines Fensterhebermotors. Die Gefahr, dass Metallspäne im axialen Endbereich der Isolierschlitze anhaften ist deshalb gering, da bei dem erfindungsgemäßen Kommutator die spanende Bearbeitung, insbesondere das Schlichten nicht bis zu dem den Befestigungsmitteln gegenüberliegenden freien axialen Ende der Metalllamellen durchgeführt werden muss, sondern dass die spanende Bearbeitung, insbesondere zumindest das Schlichten vor Erreichen dieses axialen Endes beendet wird, wodurch randseitig an den, insbesondere aus Kupfer oder einer Kupferlegierung bestehenden Metalllamellen, der sich in Umfangsrichtung erstreckende erste Absatz entsteht. Da das Spanwerkzeug, insbesondere das Schlichtwerkzeug nicht bis zu dem axialen Ende der Metalllamellen geführt wird, kann der Spanfluss mit axialem Abstand zu dem axialen Ende der Metalllamellen abreißen, wodurch ein Anhaften von Metallspänen, insbesondere in den zwischen den Metalllamellen befindlichen und sich in axialer Richtung erstreckenden Isolierspalten vermieden wird. Eine spanende Bearbeitung der Metalllamellen ist notwendig, um die durch die auf der Lauffläche entlang gleitenden Kohlebürsten entstehenden Geräusche zu minimieren.

In Ausgestaltung der Erfindung ist mit Vorteil vorgesehen, dass die Befestigungsmittel von dem Metalllamellen gebildet sind. Bevorzugt ist mit jeder Metalllamelle jeweils mindestens ein Befestigungsmittel einstückig ausgebildet, wodurch auf ein separates Festlegen der Befestigungsmittel an den Metalllamellen verzichtet werden kann.

Mit Vorteil ist eine Ausführungsform der Erfindung, nach der die Umfangslauffläche zu beiden Axialseiten von sich in Umfangsrichtung erstreckenden Absätzen begrenzt ist. Beide Absätze überragen dabei die Umfangslauffläche in axialer Richtung. Anders ausgedrückt, ist die Umfangslauffläche radial nach innen abgesetzt. Die spanende Bearbeitung der Metalllamellen, zumindest das Schichten, erfolgt also in einem von den axialen Enden der Metalllamellen beabstandeten Axialabschnitt, wodurch zu beiden Seiten der Umfangslauffläche ein Verhaken bzw. Anhaften von Spänen in den die Metalllamellen voneinander isolierenden Isolierschlitzen verhindert wird.

Von Vorteil ist eine Ausführungsform, bei der der zweite sich in Umfangsrichtung erstreckende und die Umfangslauffläche in axialer Richtung begrenzender Absatz gegenüber dem ersten Absatz erhöht ausgebildet ist, d.h. eine größere Radialerstreckung aufweist. Diese unterschiedlichen Radialerstreckungen resultieren mit Vorteil aus der zweistufigen spanenden Bearbeitung der Metalllamellen. In einer ersten Bearbeitungsstufe werden die Metalllamellen geschruppt, wobei das Schruppen axial außen beginnt und in Richtung der Befestigungsmittel fortgesetzt wird. In einer zweiten, darauffolgenden spanenden Bearbeitungsstufe werden die Metalllamellen in die entgegengesetzte Richtung geschlichtet, wodurch der erste Absatz gebildet wird, der eine um den Materialabtrag des Schruppens geringere Radialerstreckung aufweist als der zweite Absatz.

Fertigungstechnisch ist es von Vorteil, wenn die Metalllamellen aus einem Metallband hergestellt sind, es sich bei dem Kommutator also um einen sogenannten Bandkommutator handelt. Zur Herstellung der Umfangslauffläche wird bevorzugt ein Metallband, insbesondere ein Kupferband, um einen Träger aus Kunststoff, insbesondere ein Spritzguss- oder Formpressteil gebogen und an diesem festgelegt. Daraufhin werden die in axialer Richtung verlaufenden und in Umfangrichtung beabstandeten Isolierschlitze eingebracht, insbesondere eingesägt, die die hierdurch gebildeten einzelnen Metalllamellen voneinander isolieren. Die Isolierschlitze (Sägeschlitze) erstrecken sich bevorzugt in radialer Richtung bis in den Trägerkörper hinein. Daraufhin wird die Umfangsoberfläche der Metalllamellen spanend bearbeitet - vorzugsweise in zwei Schritten, nämlich einem ersten Schruppschritt und in einem darauffolgenden Schlichtschritt. Dabei erfolgt die spanende Bearbeitung bevorzugt derart, dass der Kommutator und das Spanwerkzeug voneinander weg bewegt werden, bevor das Schlichtwerkzeug das axiale Ende der Metalllamellen erreicht, so dass der erste, die Umfangslauffläche in axialer Richtung begrenzende, endseitige Absatz entsteht. Durch die nichtdurchgängige spanende Bearbeitung wird ein Abreißen des Metallspanflusses mit axialem Abstand zu dem axialen freien Ende der Metalllamellen erreicht, wodurch ein Anhaften von Spänen in den Isolierschlitzen verhindert wird.

Gegenstand der Erfindung ist auch eine elektrische Maschine, insbesondere ein Fensterhebermotor für Kraftfahrzeuge, mit einem an einer Ankerwelle festgelegten, zuvor beschriebenen Kommutator. Beschädigungen der elektrischen Maschine durch Metallspäne werden aufgrund der erfindungsgemäßen Ausbildung des Kommutators mit Vorteil vermieden.

Ferner betrifft die Erfindung ein Herstellungsverfahren für einen zuvor beschriebenen Kommutator. Im Gegensatz zu den aus den Stand der Technik bekannten Metallkommutatoren mit Umfangslauffläche, wird zumindest ein spanender Herstellungsschritt vor Erreichen des den Befestigungsmitteln abgewandten axialen Endes der Metalllamellen unterbrochen, sodass ein sich in Umfangrichtung erstreckender, die Umfangslauffläche in axialer Richtung begrenzender erster Absatz entsteht, der bevorzugt aus einer Vielzahl von in Umfangsrichtung hintereinander angeordneten, durch die in axialer Richtung verlaufenden Isolierschlitze voneinander getrennten Teil-Umfangssegmenten besteht bzw. gebildet ist. Dabei ist es denkbar, dass sämtliche spanende Bearbeitungsschritte oder nur ein spanender Bearbeitungsschritt vor Erreichen des axialen Endes der Metalllamellen unterbrochen wird/werden, um einen Abriss des Spanflusses zu erzwingen.

In Ausgestaltung der Erfindung ist mit Vorteil vorgesehen, dass zur Fertigung des ersten Absatzes der Kommutator zunächst in Rotation versetzt wird und daraufhin ein Spanwerkzeug (bevorzugt Schlichtwerkzeug) und der Kommutator derart relativ zueinander in radialer Richtung bewegt werden, bis das Spannwerkzeug eine Bearbeitungsebene erreicht. Daraufhin werden das Spannwerkzeug und der rotierende Kommutator in axialer Richtung relativ zueinander bewegt, sodass Metallspäne von den Metalllamellen abgetragen werden. Vor Erreichen des den Befestigungsmitteln gegenüberliegenden axialen Endes der Metalllamellen werden das Spanwerkzeug und der Kommutator wieder in radialer Richtung relativ zueinander bewegt, so dass das Spanwerkzeug aus der Bearbeitungsebene entfernt wird und somit der Metallspanfluss abreißt.

Bevorzugt wird der Kommutator als sogenannter Bandkommutator hergestellt, wobei hierzu ein Metallband, insbesondere mit bereits daran ausgebildeten Befestigungsmitteln um einen hohlzylindrischen Trägerkörper gebogen wird, woraufhin die Metalllamellen durch Einbringen, insbesondere Sägen von in axialer Richtung verlaufenden Isolierschlitzen gebildet werden. Erst daraufhin erfolgt die spanende Bearbeitung der Umfangslauffläche.

### Kurze Beschreibung der Zeichnungen

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen in:
- Fig. 1:: eine Seitenansicht eines Kommutators mit einer von zwei in Umfangsrichtung verlaufenden Absätzen begrenzten Lauffläche,
- Fig. 2:: eine Rückansicht des Kommutators gemäß Fig. 1 in einer verkleinerten Darstellung und
- Fig. 3:: eine Seitenansicht eines Kommutators nach dem Stand der Technik.

### Ausführungsformen der Erfindung

In den Figuren sind gleiche Bauteile und Bauteile mit der gleichen Funktion mit den gleichen Bezugszeichen gekennzeichnet.

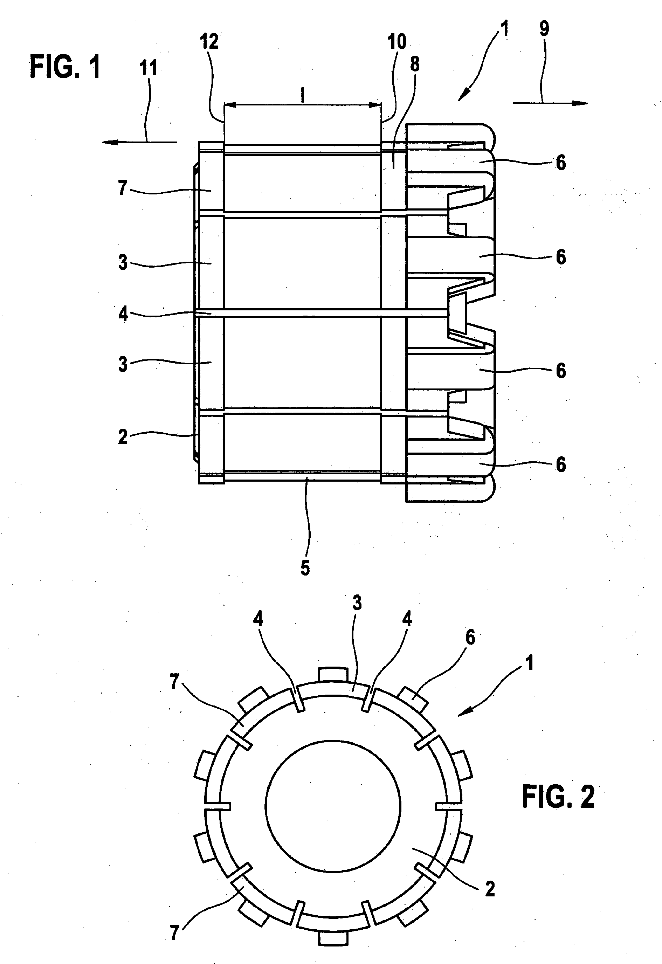

In Fig. 1 ist ein Kommutator 1 für eine nicht gezeigte elektrische Maschine, insbesondere ein Fensterhebermotör gezeigt.

Der Kommutator 1 umfasst einen hohlzylindrischen Trägerkörper 2 aus Kunststoff (vgl. Fig. 2), an dessen Außenumfang in Umfangsrichtung hintereinander angeordnete Metalllamellen 3 aus Kupfer oder einer Kupferlegierung angeordnet sind. Die Metalllamellen 3 sind voneinander separiert durch in axialer Richtung verlaufende Isolierschlitze 4, die sich in radialer Richtung bis in den Trägerkörper 2 hinein fortsetzen. Im montierten Zustand ist der Trägerkörper 2 auf einer den Trägerkörper 2 durchsetzenden Ankerwelle drehfest fixiert.

Von den Metalllamellen 3 wird eine sich in Umfangsrichtung erstreckende Lauffläche (Umfangslauffläche 5) gebildet. Diese Umfangslauffläche 5 weist eine axiale Erstreckung 1 auf. Am in der Zeichnungsebene rechten Axialende sind die Metalllamellen als hakenförmige Befestigungsmittel 6 zum kontaktierenden Festlegen eines Wicklungsdrahtes ausgebildet. Auf der den Befestigungsmitteln 6 gegenüberliegenden Axialseite wird die durch die Isolierschlitze 4 unterbrochene Umfangslauffläche 5 von einem ersten, sich in Umfangsrichtung erstreckenden Absatz 7 begrenzt. Der erste Absatz 7 wird von den Endbereichen der in Umfangsrichtung hintereinander angeordneten Metalllamellen 3 gebildet, wobei sich die Isolierschlitze 4 durch den ersten Absatz 7 in axialer sowie in radialer Richtung hindurch erstrecken. Die Umfangslauffläche 5 ist gegenüber dem ersten Absatz 7 in radialer Richtung nach innen abgesetzt.

Auf der dem ersten Absatz 7 gegenüberliegenden Ende der Umfangslauffläche 5, also axial zwischen der Lauffläche und den Befestigungsmitteln 6 ist ein zweiter Absatz 8 vorgesehen, der die Umfangslauffläche 5 an dem dem ersten Absatz gegenüberliegenden axialen Ende begrenzt. Der zweite Absatz 8 überragt den ersten Absatz 7 minimal in radialer Richtung.

Die beiden Absätze 7, 8 werden bei der spanenden Bearbeitung der Metalllamellen 3 gebildet. Diese spanende Bearbeitung erfolgt dabei bevorzugt in zwei Schritten. In einem ersten Bearbeitungsschritt, dem sogenannten Schruppen, wird ein Spanwerkzeug (Schruppwerkzeug) relativ zu dem Kommutator 1 in eine erste Richtung 9 bewegt. Dabei erfolgt ein vergleichsweise grober Materialabtrag von dem in der Zeichnungsebene linken Ende der Metalllamellen 3 bis zu der mit den Bezugszeichen 10 gekennzeichneten Axialposition. An dieser Axialposition 10 werden dann das Spanwerkzeug (Schruppwerkzeug) und der Kommutator voneinander weg bewegt. Daraufhin wird an der Axialposition 10 ein weiteres Spanwerkzeug (Schlichtwerkzeug) angesetzt, das relativ zu dem Kommutator 1 in eine zweite, der ersten Richtung 9 entgegengesetzte Richtung 11 in einer Bearbeitungsebene bewegt wird. Bei Erreichen einer mit dem Bezugszeichen 12 gekennzeichneten Axialposition werden der Kommutator 1 und das Spanwerkzeug (Schlichtwerkzeug) in radialer Richtung relativ zueinander bewegt, so dass das Schlichten an der Axialposition 12 endet. Dabei entsteht der erste Absatz 7. Durch das Beenden der Schlichtbearbeitung an der Axialposition 12 mit axialem Abstand zu dem in der Zeichnungsebene linken axialen Ende des Kommutators 1 wird ein Abreißen des Metallspäneflusses erzielt, wodurch ein Anhaften von Metallspänen in den axialen Endbereichen der Isolierschlitze 4 verhindert wird.

In Fig. 3 ist ein Kommutator aus dem Stand der Technik gezeigt. Schematisch sind die in den Endbereichen der Isolierschlitze 4 anhaftenden Metallspäne gezeigt.

## Patentansprüche

1. Kommutator für eine elektrische Maschine, mit einer aus mehreren in Umfangsrichtung hintereinander angeordneten, durch in axialer Richtung verlaufende Isolierschlitze (4) voneinander getrennten Metalllamellen (3) gebildeten Umfangslauffläche (5) und mit Befestigungsmitteln (6) zum Festlegen und Kontaktieren von Wicklungsdrähten, wobei die Metalllamellen (3) des Kommutators (1) auf einem hohlzylindrischen Trägerkörper (2) aus Kunststoff angeordnet sind,
**dadurch gekennzeichnet,**
**dass** die Umfangslauffläche (5) auf einer den Befestigungsmitteln (6) gegenüberliegenden Axialseite von einem sich in Umfangsrichtung erstreckenden, durch einen Endbereich der Metalllamellen (3) gebildeten, ersten Absatz (7) begrenzt ist, der die Umfangslauffläche (5) in radialer Richtung überragt.

2. Kommutator nach Anspruch 1,
**dadurch gekennzeichnet, dass** der erste Absatz (7) durch eine spanende Bearbeitung durch Schlichten der Metalllamellen (3) gebildet ist.

3. Kommutator nach einem der Ansprüche 1 oder 2,
**dadurch gekennzeichnet, dass** die Befestigungsmittel (6) von den Metalllamellen (3) gebildet sind.

4. Kommutator nach einem der vorhergehenden Ansprüche,
**dadurch gekennzeichnet, dass** die Umfangslauffläche (5) an ihrem dem ersten Absatz (7) gegenüberliegenden axialen Ende von einem zweiten sich in Umfangsrichtung erstreckenden Absatz (8) begrenzt ist, der die Umfangslauffläche (5) in radialer Richtung überragt.

5. Kommuatator nach einem der vorhergehenden Ansprüche,
**dadurch gekennzeichnet, dass** der erste (7) und der zweite Absatz (8) eine unterschiedliche Radialerstreckung aufweisen.

6. Kommutator nach einem der Ansprüche 3 bis 5, **dadurch gekennzeichnet, dass** die Metalllamellen (3) aus einem Metallband hergestellt, insbesondere gesägt, sind.

7. Elektrische Maschine, insbesondere Fensterhebermotor für Kraftfahrzeuge, mit einem an einer Ankerwelle festgelegten Kommutator (1) nach einem der vorhergehenden Ansprüche, wobei im montierten Zustand des Kommutators (1) der Trägerkörper (2) auf einer den Trägerkörper (2) durchsetzenden Ankerwelle drehfest fixiert ist.

8. Herstellungsverfahren für einen Kommutator (1) nach einem der Ansprüche 1 bis 6, **dadurch gekennzeichnet, dass** der erste Absatz (7) durch eine spanende Bearbeitung der Metalllamellen (3) gefertigt wird,
**dadurch gekennzeichnet, dass** ein Spanwerkzeug, insbesondere ein Schlichtwerkzeug, während der spanenden Bearbeitung in einer Bearbeitungsebene relativ zu dem Kommutator (1) aus Richtung der Befestigungsmittel (6) axial in Richtung des von den Befestigungsmitteln (6) abgewandten Endes des Kommutators (1) verstellt wird, und dass das Spanwerkzeug relativ zu dem Kommutators (1) vor Erreichen dieses axialen Endes aus der Bearbeitungsebene heraus verstellt wird.

9. Herstellungsverfahren nach einem der Ansprüche 7 oder 8,
**dadurch gekennzeichnet, dass** der Kommutator als Bandkommutator gefertigt wird.

## Claims

1. Commutator for an electrical machine, having a circumferential running surface (5) which is formed from a plurality of metal laminations (3) which are arranged one behind the other in the circumferential direction and are separated from one another by insulating slots (4) which run in the axial direction, and having fastening means (6) for securing and making contact with winding wires, wherein the metal laminations (3) of the commutator (1) are arranged on a hollow-cylindrical support body (2) which is composed of plastic, **characterized in that** the circumferential running surface (5) is bounded on an axial side, which is situated opposite the fastening means (6), by a first step (7) which extends in the circumferential direction and is formed by an end region of the metal laminations (3) and which projects beyond the circumferential running surface (5) in the radial direction.

2. Commutator according to Claim 1, **characterized in that** the first step (7) is formed by cutting machining by finishing the metal laminations (3).

3. Commutator according to either of Claims 1 and 2, **characterized in that** the fastening means (6) are formed by the metal laminations (3).

4. Commutator according to one of the preceding claims, **characterized in that** the circumferential running surface (5) is bounded at its axial end which is situated opposite the first step (7) by a second step (8) which extends in the circumferential direction and which projects beyond the circumferential running surface (5) in the radial direction.

5. Commutator according to one of the preceding claims, **characterized in that** the first step (7) and the second step (8) have a different radial extent.

6. Commutator according to one of Claims 3 to 5, **characterized in that** the metal laminations (3) are produced, in particular sawn, from a metal strip.

7. Electrical machine, in particular window winder motor for motor vehicles, having a commutator (1), which is secured to an armature shaft, according to one of the preceding claims, wherein, in the mounted state of the commutator (1), the support body (2) is fixed in a rotationally fixed manner to an armature shaft which passes through the support body (2).

8. Production method for a commutator (1) according to one of Claims 1 to 6, **characterized in that** the first step (7) is produced by cutting machining of the metal laminations (3), **characterized in that** a cutting tool, in particular a finishing tool, is adjusted relative to the commutator (1) from the direction of the fastening means (6) axially in the direction of that end of the commutator (1) which is averted from the fastening means (6) during the cutting machining in a machining plane, and **in that** the cutting tool is adjusted out of the machining plane relative to the commutator (1) before said axial end is reached.

9. Production method according to either of Claims 7 and 8, **characterized in that** the commutator is produced as a strip commutator.

## Revendications

1. Commutateur pour machine électrique, présentant
une surface périphérique de déplacement (5) formée de plusieurs lamelles métalliques (3) disposées les unes à la suite des autres dans la direction périphérique et séparées les unes des autres par des fentes isolantes (4) s'étendant dans la direction axiale et des moyens de fixation (6) qui immobilisent et assurent le contact de fils d'enroulement, les lamelles métalliques (3) du commutateur (1) étant disposées sur un corps cylindrique creux (2) de support en matière synthétique,
**caractérisé en ce que**
sur un côté axial opposé aux moyens de fixation (6), la surface périphérique de déplacement (5) est délimitée par un premier appendice (7) s'étendant dans la direction périphérique et formé par une partie d'extrémité des lamelles métalliques (3) qui déborde de la surface périphérique de déplacement (5) dans la direction radiale.

2. Commutateur selon la revendication 1, **caractérisé en ce que** le premier appendice (7) est formé par un traitement d'enlèvement de matière des lamelles métalliques (3) par meulage.

3. Commutateur selon l'une des revendications 1 ou 2, **caractérisé en ce que** les moyens de fixation (6) sont formés par les lamelles métalliques (3).

4. Commutateur selon l'une des revendications précédentes, **caractérisé en ce que** sur son extrémité axiale opposée au premier appendice (7), la surface périphérique de déplacement (5) est délimitée par un deuxième appendice (8) qui s'étend dans la direction périphérique et qui déborde de la surface périphérique de déplacement (5) dans la direction radiale.

5. Commutateur selon l'une des revendications précédentes, **caractérisé en ce que** le premier appendice (7) et le deuxième appendice (8) présentent des extensions radiales différentes.

6. Commutateur selon l'une des revendications 3 à 5, **caractérisé en ce que** les lamelles métalliques (3) sont réalisées à partir d'un feuillard métallique, en particulier par sciage.

7. Machine électrique, en particulier moteur de lève-vitre de véhicules automobiles, présentant un commutateur (1) selon l'une des revendications précédentes fixé sur un arbre d'induit, le corps de support (2) étant fixé à rotation solidaire sur un arbre d'induit qui traverse le corps de support (2) lorsque le commutateur (1) a été monté.

8. Procédé de fabrication d'un commutateur (1) selon l'une des revendications 1 à 6, **caractérisé en ce que** le premier appendice (7) est réalisé par traitement d'enlèvement de matière des lamelles métalliques (3),
**en ce qu'**un outil d'enlèvement de matière, en particulier un outil de meulage, est déplacé axialement pendant le traitement d'enlèvement de matière dans un plan de traitement par rapport au commutateur (1) depuis la direction des moyens de fixation (6) en direction de l'extrémité du commutateur (1) non tournée vers les moyens de fixation (6) et **en ce que** l'outil d'enlèvement de matière est déplacé hors du plan de traitement par rapport au commutateur (1) avant d'atteindre cette extrémité axiale.

9. Procédé de fabrication selon l'une des revendications 7 ou 8, **caractérisé en ce que** le commutateur est réalisé sous la forme d'un commutateur en bande.
